# EUROPÄISCHE PATENTSCHRIFT

(11) **EP 2 864 847 B1**
(45) Veröffentlichungstag und Bekanntmachung des Hinweises auf die Patenterteilung: **24.08.2016**
(21) Anmeldenummer: 13732385.3
(22) Anmeldetag: 12.06.2013
(51) Int. Cl.: G05B 19/418, G05B 19/048

(54) **ÜBERWACHUNG EINER ERSTEN AUSRÜSTUNG EINER TECHNISCHEN ANLAGE ZUR HERSTELLUNG EINES PRODUKTS**
MONITORING A FIRST SYSTEM OF A TECHNICAL PLANT FOR PRODUCING A PRODUCT
SURVEILLANCE D'UN PREMIER ÉQUIPEMENT D'UNE INSTALLATION TECHNIQUE DESTINÉE À FABRIQUER UN PRODUIT

(30) Priorität: 22.08.2012 EP 12181365
(43) Veröffentlichungstag der Anmeldung: 29.04.2015
(73) Patentinhaber: Siemens Aktiengesellschaft, 80333 München (DE)
(72) Erfinder: GOLDENBERG, Norbert, A-6274 Aschau i. Zillertal (AT); WINTER, Günther, 91077 Neunkirchen/Brand (DE); LEHOFER, Martin, Plainsboro, NJ 08536 (US); SCHMID, Otto, 91341 Röttenbach (DE); RÖSSIGER, Martin, 91054 Erlangen (DE)
(86) Internationale Anmeldenummer: PCT/EP2013/062107
(87) Internationale Veröffentlichungsnummer: WO 2014/029519

(56) Entgegenhaltungen:
- EP-A1- 2 458 469

## Beschreibung

Die Erfindung betrifft ein Verfahren zum Überwachen einer ersten Ausrüstung einer technischen Anlage zur Herstellung eines Produkts.

Ein derartiges Verfahren kommt beispielsweise bei technischen Anlagen mit einer Zustandsüberwachung, im Englischen: "Condition Monitoring", zum Einsatz. Der Zustandsüberwachung können dabei unterschiedlichste Sensordaten zugrunde liegen, beispielsweise Daten von Sensoren zur Erkennung von Vibrationen und Verschleiß, Daten von Temperatursensoren zur Erkennung von erhöhter Betriebstemperatur, Sensordaten bezüglich der Qualität des Schmiermittels, usw.

Aus der EP 2 458 469 A1 ist ein System zur Überwachung einer Maschine bekannt, wobei mehrere Sensoren zur Überwachung eines Parameters der Maschine und zur Erzeugung eines jeweiligen Ausgangssignals vorgesehen sind, wobei der Parameter einen Zustand der Maschine angibt. Weiterhin ist ein Modul zum Empfangen der jeweiligen Ausgangssignale und zur Erzeugung einer korrigierten Ausgabe vorgesehen, welche auf den jeweiligen Ausgangssignalen basiert. Ferner ist ein Speicher zum Speichern von manuellen Eingabefunktionen vorgesehen, welche sich auf die Konstruktion der Maschine beziehen. Neben einer Anzeige zur Anzeige einer verbleibenden Lebensdauer der Maschine ist schließlich ein Lebenszeit-Rechner vorgesehen, welcher mit dem Modul und dem Speicher gekoppelt ist und dazu ausgelegt ist, die verbleibende Lebensdauer der Maschine zu berechnen, wozu die korrigierte Ausgabe und die manuellen Eingabefunktionen verwendet werden.

Der Erfindung liegt die Aufgabe zugrunde, bekannte Konzepte zur Zustandsüberwachung zu verbessern.

Diese Aufgabe wird durch ein Verfahren der eingangs genannten Art durch folgende Verfahrensschritte gelöst:
- Zuführen von ersten Eingabedaten an eine erste Logik,
- Durchführen einer Auswertung der ersten Eingabedaten durch die erste Logik,
- Ausgeben von ersten Ausgabedaten, welche einen ersten Zustand der überwachten ersten Ausrüstung charakterisieren, durch die erste Logik
wobei die ersten Eingabedaten
- erste Sensordaten, welche von in der Anlage befindlichen ersten Sensoren bereitgestellt werden,
   mittels eines ersten Prozessmodells berechnete erste Daten, wobei das erste Prozessmodell einen ersten Prozess der Anlage abbildet, oder
   erste Automatisierungsdaten einer ersten Funktion eines ersten Automatisierungssystems der Anlage
- erste Auslegungsdaten, welche physikalische Größen der ersten Ausrüstung und/oder der Anlage charakterisieren,
- erste Parametrisierungsdaten, welche veränderliche und vorgebbare Daten bezüglich der ersten Ausrüstung und/oder der Anlage sind, und
- Betriebsdaten, welche die Herstellung des Produkts charakterisieren,
umfassen.

Die erste Logik kann beispielsweise als eine erste Software ausgeführt sein, wobei die erste Logik, die ersten Eingabedaten und die ersten Ausgabedaten auch als erster Fingerprint bezeichnet werden.

Der ersten Logik werden die ersten Eingabedaten zugeführt, welche die ersten Sensordaten umfassen können, wobei verschiedenste erste Sensoren zum Einsatz kommen können. Beispielsweise können die ersten Sensoren ausgelegt sein, um Vibrationen, eine erhöhte Betriebstemperatur, erhöhten Strom- bzw. Leistungsverbrauch, verminderte Schmiermittelqualität oder Kühlmittelqualität oder dergleichen bezüglich der ersten Ausrüstung bzw. der Anlage zu detektieren. Anstelle der ersten Sensordaten oder zusätzlich zu den ersten Sensordaten können die berechneten ersten Daten von den ersten Eingabedaten umfasst sein, wobei die berechneten ersten Daten auf dem ersten Prozessmodell basieren. Schließlich ist es auch möglich, dass die ersten Eingabewerte alternativ oder zusätzlich zu den ersten Sensordaten und den berechneten ersten Daten die ersten Automatisierungsdaten umfassen. Hierfür weist die Anlage das erste Automatisierungssystem auf, wobei die erste Funktion des ersten Automatisierungssystems beispielsweise als ein Reglerausgang des ersten Automatisierungssystems ausgeführt sein kann.

Lediglich der Klarheit halber sei dabei erwähnt, dass sich der Begriff "erste Ausrüstung" innerhalb des vorliegenden Dokuments nicht auf Erstausrüstung im Sinne von OEMs (im Englischen: "Original-Equipment-Manufacturer") beschränkt.

Um die auszugebenden ersten Ausgabedaten zu bestimmen, greift die Logik weiterhin auf erste Auslegungsdaten, wie z.B. Motorleistung bzw. -drehmoment, die die zu überwachende erste Ausrüstung charakterisieren, sowie auf erste Parametrierungsdaten zurück, wobei die ersten Parametrierungsdaten beispielsweise als Kennlinien, Hüllkurven, Schwellwerte oder Hysteresekurven vorliegen können. Die ersten Auslegungsdaten sowie die ersten Parametrisierungsdaten sind dabei ebenfalls von den ersten Eingabedaten umfasst. Auch Betriebsdaten, wie z. B. Betriebsstunden der Anlage oder insbesondere für ein Walzwerk die Tonnage, die Anzahl der produzierten Chargen, Brammen oder Bänder bzw. Coils, werden der Logik über die Eingabedaten zugeführt.

Die ersten Ausgabedaten können graphische Darstellungen umfassen, beispielsweise Darstellungen von Messkurven in Abhängigkeit der Zeit oder den graphischen Verlauf einer Temperatur.

Insbesondere kann die erste Ausrüstung als ein bestimmtes IT-System der Anlage ausgeführt sein, so dass die erste Logik die erste Ausrüstung in Form des bestimmten IT-Systems überwacht.

Bei einer vorteilhaften Ausgestaltung der Erfindung umfassen die ersten Ausgabedaten einen Zähler oder eine Abschätzung der verbleibenden Lebensdauer der ersten Ausrüstung bzw. der Anlage.

Der Zähler kann insbesondere mitzählen, wie oft die erste Ausrüstung in einer bestimmten Art und Weise betrieben wurde, beispielsweise bei Überlast. Der Zähler kann also derart ausgeführt sein, dass er mitzählen kann, wie viele Betriebsstunden die erste Ausrüstung in Überlast betrieben wurde. Weiterhin kann eine gewichtete Summierung erfolgen, zum Beispiel eine gewichtete Leistungssumme mit dem Gewichtungsfaktor Zeit und der Einheit (Sekunde x Kilowatt). Insbesondere für Überlastsituationen können somit höhere und/oder länger andauernde Überlasten mit einer höheren Gewichtung berücksichtigt werden. Bei einem derartigen Zähler handelt es sich somit um einen Überlast-Zähler, welche Rückschlüsse darüber ermöglicht, wie oft bzw. wie lang die erste Ausrüstung und/oder die Anlage nochmals in Überlast betrieben werden kann.

Alternativ zum Zähler können die ersten Ausgabedaten eine Abschätzung der verbleibenden Lebensdauer der ersten Ausrüstung bzw. der Anlage beinhalten.

Somit beinhalten die ersten Ausgabedaten wertvolle Informationen über die erste Ausrüstung bzw. Die Anlage, anhand derer beispielsweise Reparatur- oder Instandsetzungsarbeiten rechtzeitig geplant und ausgeführt werden können.

Bei einer weiteren vorteilhaften Ausgestaltung der Erfindung umfassen die ersten Ausgabedaten einen ersten Zahlenwert einer Skala, wobei die erste Logik die ersten Ausgabedaten bei Erreichen oder Überschreiten zumindest eines gegebenen ersten Wertes durch Hinzufügen einer Zusatzinformation zu erweiterten ersten Ausgabedaten erweitert.

Die Zahlenwerte der Skala können derart ausgeführt werden, dass sie als Stufen interpretierbar sind, die einen bestimmten Gut- bzw. Schlechtzustand der ersten Ausrüstung bzw. der Anlage charakterisieren. Beispielsweise kann ein niedriger erster Zahlenwert einen Gutzustand und ein höherer erster Zahlenwert einen Schlechtzustand beschreiben: denkbar sind die Stufen von 1 bis 10, wobei Stufe 10 die höchste Alarmstufe bei einem kritischen bzw. gefährlichen Zustand der ersten Ausrüstung bzw. der Anlage ist.

Die Zusatzinformation ist beispielsweise "Info", "Warnung" oder "Alarm", je nachdem, ob der jeweilige erste Wert einen vergleichsweise unkritischen oder kritischen Schlechtzustand beschreibt. Weiterhin kann die Zusatzinformation die Lokalisierung der ersten Ausrüstung umfassen oder ein "Info Package" umfassen, welches einem Mitarbeiter der Instandhaltung als Erstinformation für die weitere Handhabung eines entsprechenden Instandhaltungsauftrags zur Verfügung gestellt werden kann.

Bei einer weiteren vorteilhaften Ausgestaltung der Erfindung sind erste Gültigkeitskriterien zur Reduktion der Anzahl bzw. zum Ausschluss fehlerhafter erster Ausgabedaten vorgesehen, wobei die ersten Gültigkeitskriterien von den ersten Eingabedaten umfasst sind.

Durch die erste Logik werden weiterhin die Gültigkeitskriterien berücksichtigt, welche sicherstellen, dass fehlerhafte erste Ausgabedaten bzw. Fehlalarme ausgeschlossen bzw. deren Anzahl reduziert werden können. Die Gültigkeitskriterien stellen beispielsweise sicher, dass der Betriebsmodus der ersten Ausrüstung bzw. der Anlage dazu geeignet ist, gültige erste Ausgabedaten zu berechnen. Somit stellen die ersten Gültigkeitskriterien die Gültigkeit der ersten Ausgabedaten sicher.

Zusätzlich können die Gültigkeitskriterien einer gegebenenfalls vorhandenen Überwachungsverwaltung zugeführt werden.

Bei einer weiteren vorteilhaften Ausgestaltung der Erfindung wird eine weitere Ausrüstung der technischen Anlage mittels der folgenden Verfahrensschritte überwacht:
- Zuführen von weiteren Eingabedaten an eine weitere Logik,
- Durchführen einer Auswertung der weiteren Eingabedaten durch die weitere Logik,
- Ausgeben von weiteren Ausgabedaten, welche einen weiteren Zustand der überwachten weiteren Ausrüstung charakterisieren, durch die weitere Logik,
wobei die weiteren Eingabedaten
- weitere Sensordaten, welche von in der Anlage befindlichen weiteren Sensoren bereitgestellt werden,
mittels eines weiteren Prozessmodells berechnete weitere Daten, wobei das weitere Prozessmodell einen weiteren Prozess der Anlage abbildet, oder
weitere Automatisierungsdaten einer weiteren Funktion eines weiteren Automatisierungssystems der Anlage,
- weitere Auslegungsdaten, welche physikalische Größen der weiteren Ausrüstung und/oder der Anlage charakterisieren,
- weitere Parametrisierungsdaten, welche veränderliche und vorgebbare Daten bezüglich der weitere Ausrüstung und/oder der Anlage sind, und
- die Betriebsdaten
umfassen.

Die Überwachung zumindest einer weiteren Ausrüstung ermöglicht, komplexere Anlagen zu betrachten, welche beispielsweise mehrere verschiedene Ausrüstungen umfassen. Dies ist dadurch möglich, dass die weitere Logik und gegebenenfalls mehrere weitere Logiken zur Verfügung stehen, was auch Rückschlüsse bezüglich komplexerer Zusammenhänge zu ziehen ermöglicht. Derartige Zusammenhänge können beispielsweise schon bekannte oder bisher unbekannte Wechselwirkungen zwischen der ersten Ausrüstung und der weiteren Ausrüstung sein.

Bei einer weiteren vorteilhaften Ausgestaltung der Erfindung werden die ersten Ausgabedaten an eine Überwachungsverwaltung ausgegeben, falls ein zweiter Zahlenwert einer Skala der ersten Ausgabedaten einen gegebenen zweiten Wert erreicht oder überschreitet.

Abhängig vom zweiten Zahlenwert werden die ersten Ausgabedaten an die Überwachungsverwaltung weitergegeben, welche beispielsweise als "InfoBroker" bezeichnet wird. Die Übermittlung der ersten Ausgabedaten an die Überwachungsverwaltung kann beispielsweise auch in Abhängigkeit der oben genannten Gültigkeitskriterien und/oder der Zusatzinformation der erweiterten ersten Ausgabedaten durchgeführt werden.

Auf die Überwachungsverwaltung kann beispielsweise "remote" zugegriffen werden, d.h. aus der Entfernung beispielsweise über das Internet, unter Verwendung mobiler Geräte und/oder unter Verwendung von Abfragen durch "queries". Dabei kann vorgesehen sein, dass die Überwachungsverwaltung Daten von mobilen Geräten einliest und/oder Daten an mobile Geräte ausgibt.

Die Überwachungsverwaltung bietet somit eine Benutzerschnittstelle, die gegebenenfalls die Zusatzinformation den Benutzern verfügbar machen kann. Wie oben erwähnt, kann die Zusatzinformation beispielsweise die Information "Alarm" oder die Lokalisierung der ersten Ausrüstung sein. Die Benutzer können die angezeigte Zusatzinformation nach bestimmten Kriterien filtern, z.B. nach dem Zeitpunkt der Erzeugung bzw. Ablage der Zusatzinformation, nach der Klassifizierung der Zusatzinformation, nach Ausrüstung, etc. Weiterhin können von den Benutzern weitere Informationen zum Alarm erfasst werden, wie beispielsweise Kommentare und Einschätzungen, ob die Zusatzinformation als falsch-positiv eingeschätzt wird.

Die erste Logik kann gegenüber der Überwachungsverwaltung zusätzlich standardisierte Operationen anbieten, die dieser abrufen kann, wie z.B. Abfragen und das Festlegen von bestimmten Parametern, Abfragen von Istwerten und Auslösen von Berechnungen. Die Ergebnisse der Operationen können in einem bestimmten Format verfasst werden, welches in einer Beschreibungssprache, wie etwa "XML schema definition (XSD)" oder "document type definition (DTD)", formuliert sein kann. Dies ermöglicht eine einfache Patentierbarkeit von Daten. Die für die erste Logik für eine spezifische Ausrüstung erforderlichen Daten können in einer maschinenlesbaren und -weiterverarbeitbaren Beschreibungsdatei festgehalten werden. Weiterhin können gegebenenfalls z. B. die Adressen von einem der IT-Systeme und/oder einem der Automatisierungssysteme der Anlage, von denen Daten abgerufen werden, ein oder mehrere eindeutige(r) Bezeichner ("ID"), die Seriennummer(n) der überwachten ersten Ausrüstung bzw. Der Anlage sowie ggf. einer überwachten weiteren Ausrüstung sowie die Adresse der Überwachungsverwaltung gehören.

Bei einer weiteren vorteilhaften Ausgestaltung der Erfindung gibt die Überwachungsverwaltung eine semantische Darstellung zumindest der ersten Eingabedaten aus.

Die semantische Darstellung ist an die jeweilige zu überwachende erste Ausrüstung angepasst. Insbesondere bei Vorliegen einer komplexeren Anlage mit mehreren Ausrüstungen und Logiken kann die semantische Darstellung derart ausgebildet sein, dass mehrere erste Eingabedaten analysiert werden können.

Die semantische Darstellung kann dabei derart ausgebildet sein, dass eine Strukturierung in Form einer Ansicht oder einer Ordnung der zu Grunde liegenden Daten bezüglich der Zeit und/oder des Ortes ermöglicht wird. Die Zeit und der Ort können dabei die Zeit und den Ort der die Entstehung bzw. der Aufnahme zumindest der ersten Eingabedaten charakterisieren. Weiterhin kann die Ansicht oder die Ordnung auch in Bezug auf verschiedenen Gewerke und Interessenslagen ermöglicht werden, wie zum Beispiel geordnet nach Antrieben oder Aggregaten, wie beispielsweise Pumpen, nach geschmierten oder gekühlten Bauteilen, nach Kostenstelle oder nach Ursache und Wirkung. Die Strukturierung kann dabei frei wählbar und änderbar durch auswählte Benutzer der Überwachungsverwaltung ausgeführt werden.

Bei einer weiteren vorteilhaften Ausgestaltung der Erfindung löst die Überwachungsverwaltung zumindest eine der folgenden Aktionen aus:
- Durchführen einer Auswertung der ersten Eingabedaten mittels der weiteren Logik,
- Durchführen einer Auswertung der weiteren Eingabedaten mittels der ersten Logik,
- Verändern eines oder mehrerer Datenerfassungsparameter, welche die Bereitstellung der ersten Sensordaten durch die ersten Sensoren bzw. die Bereitstellung der weiteren Sensordaten durch die weiteren Sensoren charakterisieren,

- Weiterleiten der Zusatzinformation an ein erstes IT-System bzw. an ein zweites Automatisierungssystem der Anlage, falls die erweiterten ersten Ausgabedaten eine Zusatzinformation umfassen,
- Benachrichtigen von Personen oder Personengruppen bei einem Betreiber der Anlage und/oder einem Dienstleister.

Die Auswertung der ersten Eingabedaten mittels der weiteren Logik erlaubt einen umfassenderen Blick auf die erste Ausrüstung und kann durch die Überwachungseinrichtung ausgelöst werden. Beispielsweise umfassen die ersten Eingabedaten Vibrationsdaten und Temperaturdaten bezüglich der ersten Ausrüstung, wobei die Vibrationsdaten von der ersten Logik und die Temperaturdaten von der weiteren Logik ausgewertet werden können. Somit können auch komplexere Zusammenhänge und Wechselwirkungen erkannt und berücksichtigt werden.

Weiterhin können mittels der ersten Logik auch die weiteren Eingabedaten ausgewertet werden. Beispielsweise umfassen die ersten Eingabedaten Vibrationsdaten der ersten Ausrüstung und die weiteren Eingabedaten umfassen Vibrationsdaten der weiteren Ausrüstung, so dass die erste Logik jeweils die Vibrationsdaten der beiden Ausrüstungen auswertet. Dies ermöglicht das Verwenden simplerer Logiken.

Die Überwachungsverwaltung kann weiterhin veranlassen, dass Datenerfassungsparameter, wie zum Beispiel die Sampling-Rate oder die Auflösung des ersten Sensors und/oder des weiteren Sensors geändert werden. Insbesondere kann, falls sich die erste Ausrüstung in einem bedenklichen Zustand befindet, die Datenerfassung detaillierter gestaltet werden, um eventuelle Schadensbilder oder Wechselwirkungen einer komplexen Anlage besser zugänglich bzw. detektierbar zu machen.

Auch die Weiterleitung der Zusatzinformation an das erste IT-System bzw. an das zweite Automatisierungssystem der Anlage kann von der Überwachungsverwaltung angestoßen werden. Das erste IT-System kann anschließend eine weitere Analyse, beispielsweise Data-Mining, durchführen, um Korrelationen zu ermitteln und auszuwerten, insbesondere in Bezug auf den Verbrauch, die Produktqualität, den Zustand der ersten Ausrüstung bzw. der Anlage und/oder die Kosten.

Insbesondere kann die Zusatzinformation "Alarm" an das zweite Automatisierungssystem der Anlage weitergegeben werden, so dass die Anlage notfalls heruntergefahren werden kann. Somit können schwerwiegende Beschädigungen der restlichen Anlage verhindert werden und Kosten eingespart werden. Insbesondere kann die Zusatzinformation ein "Info Package" umfassen, welches einem Mitarbeiter der Instandhaltung als Erstinformation für die weitere Handhabung eines entsprechenden Instandhaltungsauftrags zur Verfügung gestellt werden kann.

Auf Veranlassung der Überwachungsverwaltung können auch die Anlagenbetreiber oder Dienstleister, beispielsweise für Reparaturen und/oder Instandhaltung Zuständige, benachrichtigt werden, so dass die Verfügbarkeit der Anlage erhöht wird. Dies ist insbesondere der Fall, wenn die Zuständigen rechtzeitig vor dem Auftreten eines schwerwiegenderen Problems benachrichtigt werden, beispielsweise, wenn die erweiterten ersten Ausgabedaten die Zusatzinformation "Warnung" enthalten. Denkbar ist auch, einen Instandhaltungsauftrag auszulösen, beispielsweise indem die Zusatzinformation an ein computerunterstütztes Instandhaltungs-Management-System (englisch: Computerized Maintanance Management System, CMMS) ausgegeben wird.

Bei einer weiteren vorteilhaften Ausgestaltung der Erfindung erfolgt die Bereitstellung der ersten Sensordaten durch die ersten Sensoren und/oder die Auswertung der ersten Eingabedaten durch die erste Logik abhängig vom Zustand der ersten Ausrüstung oder abhängig von der ersten Funktion des ersten Automatisierungssystems.

Durch die Bereitstellung der ersten Sensordaten bzw. die Auswertung der ersten Sensordaten durch die erste Logik in Abhängigkeit des Zustands der ersten Ausrüstung oder in Abhängigkeit der ersten Funktion des ersten Automatisierungssystems lässt sich der Kommunikationsaufwand innerhalb der Anlage bzw. der Aufwand für die Auswertung der ersten Sensordaten verringern. Dabei kann dies durchgeführt werden, ohne dass die Qualität der Überwachung der ersten Ausrüstung beeinträchtigt wird, beispielsweise, indem die Bereitstellung der ersten Sensordaten bzw. deren Auswertung nur bei jenen Situationen durchgeführt wird, bei denen die erste Ausrüstung bzw. die Anlage unter Volllast läuft oder zumindest große Belastungen zu erwarten sind. Beispielsweise kann solch eine Situation das Hochfahren der ersten Ausrüstung bzw. der Anlage sein, wenn die Schmiermitteltemperatur sehr niedrig ist. Insbesondere kann eine solche Situation auch dann gegeben sein, wenn zu erwarten ist, dass die Kühlmitteltemperatur hoch ist, beispielsweise wenn innerhalb eines Arbeitszyklus der ersten Ausrüstung bzw. der Anlage die elektrische Leistungsaufnahme am größten ist.

Denkbar ist auch die Bereitstellung der ersten Sensordaten bzw. deren Auswertung durch die erste Logik mit einer vorgegebenen Zykluszeit, wie beispielsweise minütlich, stündlich, täglich oder dergleichen durchzuführen.

Darüber hinaus kann die Bereitstellung der berechneten ersten Daten und/oder die Bereitstellung der ersten Automatisierungsdaten ebenfalls abhängig vom Zustand der ersten Ausrüstung oder abhängig von der ersten Funktion des ersten Automatisierungssystems sein. Ferner können die zuvor genannten Daten auch in Abhängigkeit des Zustands der Anlage bereitgestellt werden, sofern der Zustand der Anlage zugänglich ist, was beispielsweise dadurch erreicht werden kann, dass mehrere Logiken die komplette Anlage überwachen. Schließlich kann auch die Bereitstellung der restlichen ersten Eingabedaten mit derartigen Abhängigkeiten ausgeführt werden.

Bei einer weiteren vorteilhaften Ausgestaltung der Erfindung wird das Verfahren periodisch durchgeführt, wobei die die Periode durch die Überwachungsverwaltung änderbar ist.

Die Änderung der Periode erlaubt beispielsweise, die Auflösung von gemessenen ersten Sensordaten, von Messkurven oder von abgeleiteten Kurven zu erhöhen. Dadurch kann eine besonders genaue Überwachung der ersten Ausrüstung erreicht werden, welche beispielsweise benötigt wird, wenn die Zusatzinformation der erweiterten ersten Ausgabedaten "Warnung" oder "Alarm" lautet.

Bei Vorhandensein einer weiteren Logik kann die Überwachungsverwaltung ggf. auch die Periode von Verfahrensschritten ändern, die sich auf die weitere Logik beziehen.

Bei einer weiteren vorteilhaften Ausgestaltung der Erfindung werden die ersten Ausgabedaten an eine Überwachungsverwaltung ausgegeben, falls ein zweiter Zahlenwert einer Skala der ersten Ausgabedaten einen gegebenen zweiten Wert erreicht oder überschreitet, wobei die Überwachungsverwaltung zumindest die ersten Eingabedaten und die ersten Ausgabedaten als einen ersten Schnappschuss in einem ersten Langzeitarchiv ablegt, falls ein dritter Zahlenwert einer Skala der ersten Ausgabedaten einen gegebenen dritten Wert erreicht oder überschreitet und/oder falls die Langzeitarchivierung manuell ausgelöst wird.

Zusätzlich zu den ersten Eingabedaten und den ersten Ausgabedaten kann der erste Schnappschuss gegebenenfalls die Zusatzinformation beinhalten, beispielsweise auch das oben genannte "Info Package".

Die Ablage des ersten Schnappschusses (englisch: "snap shot") dient dazu, den Zustand der ersten Ausrüstung bzw. der Anlage im Nachhinein genauer zu analysieren. Diese Analyse kann beispielsweise durchgeführt werden, wenn die erste Ausrüstung gewartet, repariert oder ausgetauscht wird und nun beispielsweise die Abnutzung und der Verschleiß der ersten Ausrüstung nachvollzogen werden sollen. Dies erlaubt somit auch Rückschlüsse auf das zukünftige Verhalten der ersten Ausrüstung bzw. baulich ähnliche Ausrüstungen der Anlage.
Dabei kann die Ablage des ersten Schnappschusses auch manuell ausgelöst werden, insbesondere bei der Abnahme der Anlage durch den Betreiber nach der Inbetriebnahme, beim Abschluss von Instandhaltungsmaßnahmen, bei Havarien, oder bei Spontanbrüchen.

Neben einem ersten Schnappschuss kann die Überwachungsverwaltung auch einen weiteren Schnappschuss in dem ersten Langzeitarchiv ablegen, wobei der weitere Schnappschuss zumindest die weiteren Eingabedaten und die weiteren Ausgabedaten umfasst. Zusätzlich kann gegebenenfalls die jeweilige Zusatzinformation vom jeweiligen Schnappschuss umfasst sein, welche zusammen mit dem jeweiligen Schnappschuss dann ebenfalls im Langzeitarchiv abgelegt wird.

Bei einer weiteren vorteilhaften Ausgestaltung der Erfindung legt die erste Logik zumindest die ersten Eingabedaten und die ersten Ausgabedaten als einen zweiten Schnappschuss in einem zweiten Langzeitarchiv ab, falls ein vierter Zahlenwert einer Skala der ersten Ausgabedaten einen gegebenen vierten Wert erreicht oder überschreitet und/oder falls die Langzeitarchivierung manuell ausgelöst wird.

Für den Fall, dass gewünscht ist, dass die erste Logik die ersten Eingabedaten und die ersten Ausgabedaten ständig in das zweite Langzeitarchiv ablegt, kann der gegebene vierte Wert entsprechend niedrig gewählt werden.

Alternativ oder zusätzlich zur ersten Logik können die ersten Eingabedaten und die ersten Ausgabedaten auch durch die Überwachungsverwaltung in das zweite Langzeitarchiv abgelegt werden.

Gegebenenfalls können auch weitere Eingabedaten und weitere Ausgabedaten durch die Überwachungseinrichtung oder eine weitere Logik als ein weiterer Schnappschuss in eines der Langzeitarchive abgelegt werden.

Bei einer weiteren vorteilhaften Ausgestaltung der Erfindung bleiben vorgebbare, im ersten Langzeitarchiv oder dem zweiten Langzeitarchiv abgelegte Schnappschüsse bei einer Datenverdichtung oder Datenlöschung unberücksichtigt.

Solche vorgebbare Schnappschüsse können beispielsweise jene sein, die bei der Abnahme der Anlage durch den Betreiber nach der Inbetriebnahme oder nach dem Abschluss von Instandhaltungsmaßnahmen abgelegt wurden. Dadurch, dass diese Schnappschüsse nicht verdichtet oder gelöscht werden, lässt sich der Zustand der ersten Ausrüstung bzw. der Anlage sicher mit diesen Referenz-Zuständen vergleichen, selbst wenn zwischenzeitlich viel Zeit vergangen ist und die Daten des Langzeitarchivs aus Speicherknappheit teilweise verdichtet oder gelöscht wurden.

Bei einer weiteren vorteilhaften Ausgestaltung der Erfindung werden der erste Schnappschuss und ein gleichzeitig erfasster weiterer Schnappschuss, der zumindest die weiteren Eingabedaten und die weiteren Ausgabedaten umfasst, mit einer gemeinsamen Referenz im ersten Langzeitarchiv und/oder im zweiten Langzeitarchiv abgelegt.

Die Referenz ist beispielsweise ein Zeitstempel, so dass der erste Schnappschuss bzw. der weitere Schnappschuss durch die Ablage zusammen mit der Referenz erlaubt, Rückschlüsse über den Zustand der ersten Ausrüstung bzw. der weiteren Ausrüstung zu einem gewünschten Zeitpunkt zu ziehen. Insbesondere durch die gemeinsame Ablage des ersten Schnappschusses, des weiteren Schnappschusses und der gemeinsamen Referenz im ersten Langzeitarchiv und/oder im zweiten Langzeitarchiv wird ermöglicht, Zusammenhänge und Wechselwirkungen zwischen beispielsweise der ersten Ausrüstung und der weiteren Ausrüstung zu analysieren und zu untersuchen, insbesondere auch nachdem zwischenzeitlich viel Zeit seit der gemeinsamen Ablage vergangen ist.

Dabei stellt die gemeinsame Referenz beispielsweise sicher, dass der erste Schnappschuss und der weitere Schnappschuss gleichzeitig aufgenommen wurden oder in einem zeitlichen Zusammenhang stehen. Durch eine Ablage von mehreren ersten Schnappschüssen bzw. mehreren weiteren Schnappschüssen, welche jeweils in einer bestimmten zeitlichen Reihenfolge erstellt wurden, können zusätzlich der zeitliche Verlauf des Zustands der ersten Ausrüstung bzw. der weiteren Ausrüstung sowie Wechselwirkungen zwischen der ersten Ausrüstung und der weiteren Ausrüstung nachvollzogen und ausgewertet werden.

Bei einer weiteren vorteilhaften Ausgestaltung der Erfindung wird dabei, falls zu einem gegebenen Zeitpunkt die ersten Gültigkeitskriterien nicht erfüllt sind, der letztgültige oder der nächstgültige erste Schnappschuss mit derselben Referenz im ersten Langzeitarchiv und/oder im zweiten Langzeitarchiv abgelegt, wie jener weitere Schnappschuss des gegebenen Zeitpunkts.

Hierdurch werden die Auswertbarkeit und somit auch die Aussagekraft der abgelegten Schnappschüsse erhöht.

Bei einer weiteren vorteilhaften Ausgestaltung der Erfindung werden zumindest die ersten Eingabedaten und die ersten Ausgabedaten in einem Zwischenspeicher abgelegt, falls ein fünfter Zahlenwert einer Skala der ersten Ausgabedaten einen gegebenen fünften Wert erreicht oder überschreitet.

Der Zwischenspeicher ist dabei eine zur Langzeitablage unterschiedliche Ablagemöglichkeit, welche beispielsweise in Form eines Ringspeichers realisiert werden kann. Insbesondere werden in den Zwischenspeicher ständig die aktuellen ersten Eingabedaten und die aktuellen erste Ausgabedaten abgelegt, wobei gegebenenfalls zusätzlich die aktuellen weiteren Eingabedaten und die aktuellen weiteren Ausgabedaten sowie die gegebenenfalls jeweils verfügbare Zusatzinformation abgelegt werden können.

Bei dem Zwischenspeicher kann vorgesehen sein, dass die neuen abgelegten Daten in den Speicherplatz der ältesten, im Zwischenspeicher abgelegten Daten geschrieben werden, so dass die ältesten im Zwischenspeicher abgelegten Daten überschrieben werden und verloren gehen. Somit können im Zwischenspeicher jeweils die aktuellen Daten sowie, abhängig von der Speicherkapazität des Zwischenspeichers, die jeweiligen Daten bis zu einem gewünschten, in der Vergangenheit liegenden Zeitpunkt abgelegt werden. Hierdurch stehen die Daten zum Beispiel der Überwachungsverwaltung oder auch einen zusätzlichen Analyseeinheit zur Verfügung.

Die Ablage der ersten Eingabedaten und der ersten Ausgabedaten kann beispielsweise durch die erste Logik oder die Überwachungsverwaltung erfolgen. Gegebenenfalls kann auch eine Ablage von weiteren Eingabedaten und weiteren Ausgabedaten durch eine weitere Logik oder die Überwachungsverwaltung erfolgen.

Bei einer weiteren vorteilhaften Ausgestaltung der Erfindung wird ein Bericht erstellt und das Format des Berichts an ein spezifisches Ausgabemedium angepasst ist, falls ein sechster Zahlenwert einer Skala der ersten Ausgabedaten einen gegebenen sechsten Wert erreicht oder überschreitet.

Der Bericht kann insbesondere die ersten Eingabedaten und die ersten Ausgabedaten umfassen, wobei beispielsweise auch die weiteren Eingabedaten und die weiteren Ausgabedaten in den Bericht aufgenommen werden können. Gegebenenfalls kann der Bericht auch die jeweilige Zusatzinformation enthalten, wobei der Bericht beispielsweise im Langzeitarchiv und/oder im Zwischenspeicher abgelegt werden kann.

Weiterhin ist denkbar, dass der Bericht an ein zweites IT-System bzw. ein drittes Automatisierungssystem der Anlage gesendet wird, welches dann auf Grundlage des Berichts weitere Schritte unternehmen kann. Schließlich kann der Bericht auch von der Überwachungsverwaltung angezeigt werden bzw. deren Benutzern verfügbar gemacht werden.

Das Format des Berichts ist an spezifische Ausgabemedien angepasst, zum Beispiel den Ausdruck auf Papier, die Anzeige auf einem Bildschirm eines PCs oder mobilen Geräts bzw. den Versand per Email oder via SMS und dergleichen. Auf den Bericht kann beispielsweise "remote" zugegriffen werden, d.h. aus der Entfernung beispielsweise über das Internet, unter Verwendung mobiler Geräte und/oder unter Verwendung von Abfragen durch "queries".

Der Bericht kann beispielsweise zyklisch erstellt werden, wie zum Beispiel monatlich. Er kann auch erstellt werden, sobald falls der sechster Zahlenwert einer Skala der ersten Ausgabedaten einen gegebenen sechsten Wert erreicht oder überschreitet.

Im Übrigen kann der gegebene sechste Wert derart niedrig gewählt werden, dass der Bericht ständig erstellt wird. Weiterhin kann der gegebene sechste Wert identisch sein mit zumindest einem der gegebenen zweiten bis fünften Werte. Entsprechende Überlegungen gelten gleichermaßen jeweils für den gegebenen zweiten, dritten, vierten und fünften Wert.

Das erste und/oder zweite Automatisierungssystem können dabei identisch mit dem dritten Automatisierungssystem ausgeführt werden. Auch das erste IT-System und das weitere IT-System können durch ein einziges IT-System verwirklicht werden.

Bei einer weiteren vorteilhaften Ausgestaltung der Erfindung werden zumindest die ersten Sensoren auch für ein drittes Automatisierungssystem der Anlage verwendet.

Durch das Verwenden der ersten Sensoren sowohl für die Zwecke des dritten Automatisierungssystems als auch für die Zwecke der Überwachung der ersten Ausrüstung und/oder der Anlage lassen sich Kosten einsparen und der Installationsaufwand für die Überwachung der ersten Ausrüstung und/oder der Anlage verringern. Denn üblicherweise benötigt das dritte Automatisierungssystem Sensoren, wobei sich ein Vorteil dadurch ergibt, dass die für das dritte Automatisierungssystem notwendigen ersten Sensoren zusätzlich für die Überwachung der ersten Ausrüstung verwendet werden. Somit entsteht zumindest in Bezug auf die ersten Sensoren kein zusätzlicher Aufwand bzw. keine zusätzliche Kosten für die Überwachung der ersten Ausrüstung.

Bei einer weiteren vorteilhaften Ausgestaltung der Erfindung sind die ersten Sensoren als virtuelle Sensoren ausgeführt.

Die virtuellen Sensoren, im Englischen auch als "soft sensors" bezeichnet, können beispielsweise als Software ausgebildet sein, welche mehrere Messungen von als Hardware ausgeführten Sensoren oder sonstige Signale verarbeitet und einen entsprechenden Messwert ausgibt. Dabei können die Messungen, welche den virtuellen Sensoren zugrunde liegen, in der ersten Ausrüstung, gegebenenfalls der weiteren Ausrüstung, einem der Automatisierungssysteme der Anlage, einem der IT-System in der Anlage und/oder einem anderen Teil der Anlage durchgeführt werden. Beispielsweise können die virtuellen Sensoren dergestalt sein, dass ihre Messwerte auch Ausgänge von digitalen Regelungen oder Reibwertberechnungen sind.

Anhand der virtuellen Sensoren kann insbesondere auf physikalische Größen geschlossen werden, welche andernfalls einer Messung bzw. Erfassung nicht zugänglich sind. Die virtuellen Sensoren liefern somit virtuelle Messwerte, die beispielsweise erst bei Berechnungen des jeweiligen Automatisierungssystems entstehen und die beispielsweise Korrekturfaktoren sein können, die für eine Adaption der Prozessautomatisierung an die bestehende Anlage ermittelt werden.

Beispielsweise wird in einem Walzwerk ein Temperaturmodell in der Prozessautomatisierung verwendet. Das Temperaturmodell kann einen Korrekturfaktor für den Wärmeübergang zwischen der Umgebung und dem gewalzten Stahlband umfassen. Solange die Anlage ihren Zustand kaum ändert, wird der Korrekturfaktor sich ebenfalls kaum ändern, vorausgesetzt, das in der Prozessautomatisierung verwendete Modell bleibt gleich. Damit beschreibt der Korrekturfaktor auf globale, d.h. zusammenfassende Weise den Anlagenzustand. Ändert sich der Korrekturfaktor signifikant, dann bedeutet das in der Regel, dass das verwendete Modell der Prozessautomatisierung die Anlage nicht mehr optimal beschreibt. Sofern dieses Modell nicht geändert wurde, hat sich demnach der Zustand der Anlage selbst signifikant geändert. Daher kann es sich als sehr vorteilhaft erweisen, anstelle einzelner Messwerte aus der Anlage den Korrekturfaktor zu überwachen.

Bei einer weiteren vorteilhaften Ausgestaltung der Erfindung werden die Parametrierungsdaten mit einer vorgebbaren Dynamik verändert.

Die Dynamik kann beispielsweise als ein Lernalgorithmus ausgeführt sein, mittels welchem die erste Logik bezüglich des Erkennens des ersten Zustands der überwachten ersten Ausrüstung und/oder der Anlage trainiert werden kann. Beispielsweise werden in den Parametrierungsdaten umfasste Hüllkurven durch die Dynamik angepasst, so dass sich die zulässigen ersten Eingabedaten mit der Zeit ändern.

Dies ist vorteilhaft, wenn sich die erste Ausrüstung und/oder die Anlage und damit die zulässigen ersten Sensordaten, die berechneten ersten Daten bzw. die ersten Automatisierungsdaten langfristig, aber geringfügig ändern, beispielsweise durch die Abnutzung oder die Alterung von Teilen der ersten Ausrüstung und/oder der Anlage. Denn durch die Abnutzung oder die Alterung verschiebt sich allmählich der zulässige Bereich der ersten Eingabedaten, beispielsweise der ersten Sensordaten, der berechneten ersten Daten bzw. der ersten Automatisierungsdaten, so dass die erste Logik zulässige erste Eingabedaten irgendwann als unzulässig erkennen würde und/oder unzulässige erste Eingabedaten als zulässig erkennen würde. Die erste Logik kann in bestimmten zeitlichen Abständen manuell oder automatisch nachtrainiert werden, so dass der zulässige Bereich der ersten Eingabedaten nachgeführt wird. Dabei kann der zulässige Bereich durch eine zulässige Änderungsrate und/oder deren Änderungsgradienten beschränkt werden, so dass sich die zulässigen ersten Eingabedaten in einem bestimmten Zeitraum nur um einen fest vorgegebenen Wert verändern dürfen. Damit kann die erste Logik auch bei einer sich langsam ändernden ersten Ausrüstung und/oder Anlage plötzlich auftretende "Ausreißer" von ersten Eingabedaten detektieren, welche außerhalb des aktuell zulässigen Bereichs liegen.

Interessant ist dabei, die vorgebbare Dynamik und deren Parameter global über mehrere Ausrüstungen zu optimieren. Für den Fall, dass Ausrüstungen mehrere Anlagen mittels des erfindungsgemäßen Verfahrens überwacht werden, kann die Optimierung auch über diese Anlagen bzw. deren Ausrüstungen und/oder entsprechende Langzeitarchive erfolgen. Die somit erhaltenen, optimierten Parameter der vorgebbaren Dynamik können anschließend als Startwert dienen.

Als Startwert können beispielsweise auch Abschätzungen von Parametern für eine in gebrauchtem Zustand in die Anlage eingebaute Ausrüstung dienen, wobei somit von vornherein die richtigen Grenzen für den vorliegenden Verschleiß dieser Ausrüstung eingesetzt werden können.

Als Lernalgorithmus kann beispielsweise ein "Random Forst"-Algorithmus zum Einsatz kommen, um die erste Logik bezüglich des Erkennens der Zulässigkeit des ersten Zustands der überwachten ersten Ausrüstung zu trainieren. Hierzu wird eine feste Anzahl von Entscheidungsbäumen festgelegt, wobei jeder der Entscheidungsbäume ausgewertet wird, um den Lernschritt der Dynamik zu bestimmen. Um die erste Logik dynamisch nachzuführen, kann man nun bei jedem Nachtrainings-Schritt eine bestimmte Anzahl von bestehenden Entscheidungsbäumen löschen, vorzugsweise diejenigen, die eine Trainingsmenge am schlechtesten beschreiben. Diese werden nun ersetzt durch neu festgelegte Entscheidungsbäume. Welcher Anteil der Entscheidungsbäume ersetzt wird, lässt sich vorher einstellen, wobei dieser Anteil bestimmt, wie stark das Modell beim Nachführen auf Veränderungen reagieren darf.

Alternativ zum "Random Forest"-Algorithmus können auch andere Lernalgorithmen verwenden werden, z.B. mehrere neuronale Netze, die genauso wie die Entscheidungsbäume bei jedem Nachtraining teilweise ersetzt werden. Weiterhin kann auch polynomiale Regression eingesetzt werden, wobei die Regressionsterme selbst beim Nachtraining gleich bleiben und nur deren Koeffizienten in engen Grenzen verändert werden dürfen.

Bei einer weiteren vorteilhaften Ausgestaltung der Erfindung ist die vorgebbare Dynamik in Abhängigkeit von den ersten Eingabedaten änderbar.

Die vorgebbare Dynamik kann durch die ersten Eingabedaten beeinflusst werden, beispielsweise durch die ersten Sensordaten, insbesondere wenn die ersten Sensoren als virtuelle Sensoren ausgeführt sind. Somit kann die Dynamik anhand von Korrekturfaktoren zur Adaption des ersten Automatisierungssystems Informationen darüber berücksichtigen, wie gut die Anlage im gegenwärtigen Zustand zur ersten Logik bzw. dem darin abgelegten Modell des ersten Automatisierungssystems passt. Für den Fall, dass sich diese Korrekturfaktoren über die Zeit kaum ändern, kann vorgesehen sein, dass sich auch die Dynamik und somit auch die erste Logik zur Überwachung der ersten Ausrüstung nur geringfügig ändern. Ändern sich die Korrekturfaktoren hingegen signifikant, dann kann auch ein umfangreiches automatisches Nachtrainieren der Dynamik erlaubt sein.

Insgesamt betrachtet ist es ein wesentliches Bestreben der Anlagenbetreiber, aus erfassten Messwerten und Daten Informationen mit Gehalt zu bilden, die dann zur Planung der Wartung und für Entscheidungen herangezogen werden können. Dabei ist die Erfassung und Speicherung von einer Vielzahl von Daten heute technisch kein Problem mehr.
Ein Aspekt der vorliegenden Erfindung ist die Integration aller Ergebnisse von mobilen und online Systemen sowie manueller Aufzeichnungen zu ermöglichen, wobei die Ergebnisse im Zwischenspeicher, in das Langzeitarchiv und/oder eines der IT-Systeme oder dergleichen abgelegt werden können. Weiterhin kann mit den obigen vorteilhaften Ausgestaltungen eine gesicherte Langzeit-Wissensbasis zum Anlagenzustand aufgebaut werden, wobei der Anlagenzustand und die Zusammenhänge allen Stakeholdern transparent gemacht werden können. Dadurch kann Expertenwissen unabhängig von Individualwissen archiviert werden, wobei eine holistische Vorgehensweise in einer Ursache-Wirkungs-Analyse durch mehrere Sichten ermöglicht werden kann, beispielsweise in Bezug auf Ort, Zeit, Ursache, Wirkung. Weiterhin sind ein Vergleich von Anlagenteilen sowie eine integrierte Unterstützung von Wartungs-Workflows möglich.

Im Folgenden wird die Erfindung anhand der in den Figuren dargestellten Ausführungsbeispiele näher beschrieben und erläutert. Es zeigen:
- FIG 1: eine Schemadarstellung des erfindungsgemäßen Verfahrens,
- FIG 2: eine Schemadarstellung einer Ablage eines ersten Schnappschusses in einem Langzeitarchiv und in einem Zwischenspeicher,
- FIG 3: eine Darstellung von ersten Eingabedaten,
- FIG 4: eine weitere Darstellung von ersten Eingabedaten, und
- FIG 5: eine Schemadarstellung einer überwachten ersten Ausrüstung und mehreren überwachten weiteren Ausrüstungen.

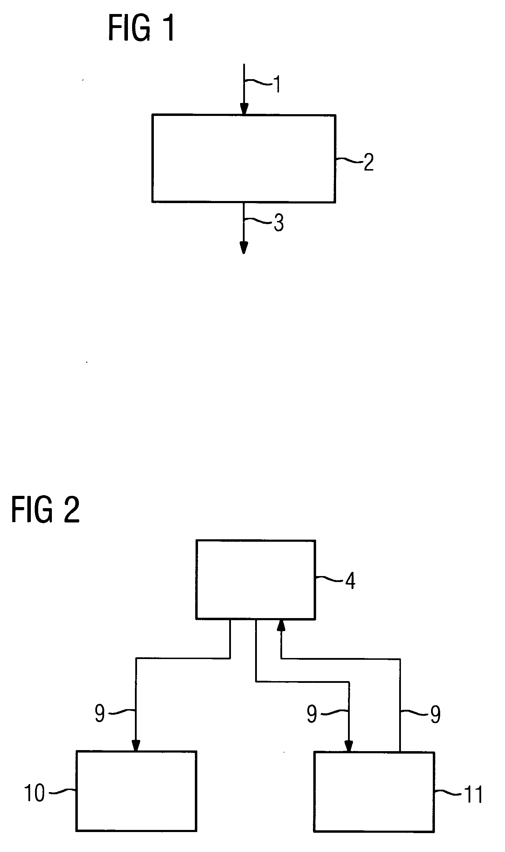

Figur 1 zeigt eine Schemadarstellung des erfindungsgemäßen Verfahrens. Um eine erste Ausrüstung einer technischen Anlage und/oder die Anlage zur Herstellung eines Produkts zu überwachen, werden erste Eingabedaten 1 an eine erste Logik 2 übermittelt. Die erste Logik 2 führt eine Auswertung der ersten Eingabedaten 1 durch und gibt erste Ausgabedaten 3 aus, welche einen ersten Zustand der überwachten ersten Ausrüstung und/oder der Anlage charakterisieren. Erfindungsgemäß umfassen die ersten Eingabedaten 1 erste Sensordaten, berechnete erste Daten bzw. erste Automatisierungsdaten sowie erste Auslegungsdaten, erste Parametrisierungsdaten und Betriebsdaten.

Für den Fall, dass eine weitere Ausrüstung der technischen Anlage überwacht wird, findet das erfindungsgemäße Verfahren Anwendung, bei dem weitere Eingabedaten an eine weitere Logik übermittelt werden. Die weitere Logik wertet die weiteren Eingabedaten aus und gibt weitere Ausgabedaten aus.

Alternativ ist denkbar, dass die weiteren Eingabedaten durch die erste Logik 2 ausgewertet werden, welche dann die weiteren Ausgabedaten ausgibt. Schließlich können die ersten Eingabedaten 1 alternativ auch durch die weitere Logik ausgewertet werden, so dass die weitere Logik die ersten Ausgabedaten 3 ausgibt.

Figur 2 zeigt eine Schemadarstellung einer Ablage eines ersten Schnappschusses 9 in einem Langzeitarchiv 10 und in einem Zwischenspeicher 11. der erste Schnappschuss 9 umfasst dabei zumindest die ersten Eingabedaten 1 sowie die ersten Ausgabedaten 3. Durch eine Überwachungsverwaltung 4 wird der erste Schnappschuss 9 in das Langzeitarchiv 10 geschrieben und dort gespeichert, wie durch den von der Überwachungsverwaltung 4 zum Langzeitarchiv 10 weisenden Pfeil kenntlich gemacht.

Zusätzlich kann der erste Schnappschuss 9 durch die Überwachungsverwaltung 4 auch in den Zwischenspeicher 11 geschrieben werden. Der Zwischenspeicher 11 kann beispielsweise als Ringspeicher ausgeführt sein, so dass dort immer der aktuelle erste Schnappschuss 9 hinterlegt ist, wobei beispielsweise der aktuelle erste Schnappschuss 9 jeweils den ältesten, im Zwischenspeicher 11 abgelegten ersten Schnappschuss 9 ersetzt. Die Überwachungsverwaltung 4 kann aus dem Zwischenspeicher 11 den ersten Schnappschuss 9 lesen, so dass die Überwachungsverwaltung 4 auf den Inhalt des Zwischenspeichers 11 zugreifen kann.

Gegebenenfalls kann vorgesehen sein, auch einen weiteren Schnappschuss, welcher insbesondere weitere Eingabedaten und weitere Ausgabedaten 23 einer weiteren Ausrüstung umfasst, in dem Langzeitarchiv 10 und/oder in dem Zwischenspeicher 11 abzulegen. Alternativ oder zusätzlich kann die Ablage des jeweiligen Schnappschusses auch durch die erste Logik 2 durchgeführt werden.

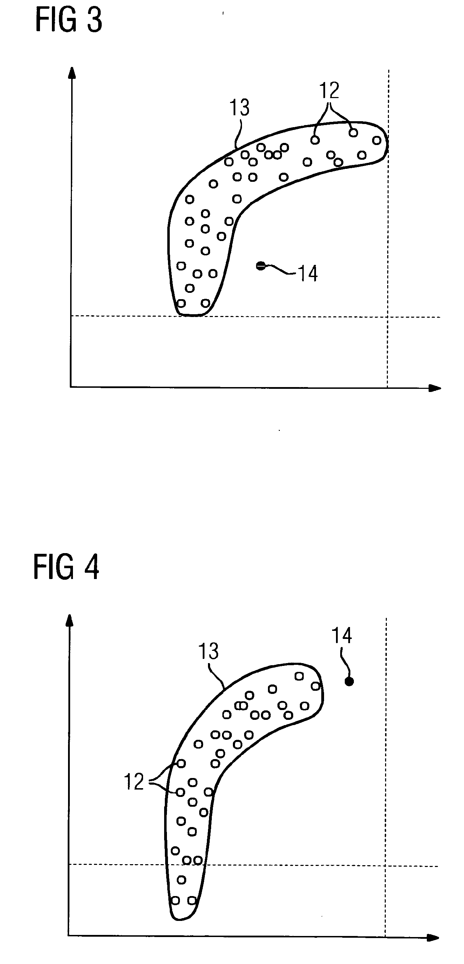

Figur 3 zeigt eine Darstellung von ersten Eingabedaten 12, 14. Jeder der dargestellten Punkte 12, 14 steht für ein komplettes Set von ersten Eingabedaten 12, 14, wobei jedes Set zu einem unterschiedlichen Zeitpunkt aufgenommen wurde. Dabei sind die ersten Eingabedaten 12, 14 mittels einer Abszissenachse und einer Ordinatenachse dargestellt, welche jeweils für beliebige, gewünschte physikalische Größen stehen können. Lediglich zur Orientierung sind eine horizontale und eine vertikale gestrichpunktete Linie eingezeichnet.

Die ersten Eingabedaten 12, 14 umfassen mehrere zulässige Datenpunkte 12, welche innerhalb eines zulässigen Bereiches 13 angeordnet sind, sowie einen unzulässigen Datenpunkt 14, welcher sich außerhalb eines zulässigen Bereichs 13 befindet. Der zulässige Bereich 13 ist beispielsweise als eine Hüllkurven in den Parametrisierungsdaten hinterlegt, welche wiederum von den ersten Eingabedaten 12, 14 umfasst sind. Lediglich der besseren Übersichtlichkeit halber wurden dabei nicht alle im zulässigen Bereich 13 befindlichen ersten Eingabedaten 12 mit einem Bezugszeichen versehen.

Figur 4 zeigt eine weitere Darstellung von ersten Eingabedaten 12, 14 wobei die Abszissenachse und die Ordinatenachse für dieselben physikalischen Größen stehen wie in Figur 3 und auch die Lage der gestrichpunkteten Linien jener in Figur 3 entspricht. Die in Figur 4 dargestellten ersten Eingabedaten 12, 14 stellen wiederum jeweils ein komplettes Set dar, wobei jedes Set zu einem unterschiedlichen Zeitpunkt aufgenommen wurde. Insgesamt wurden die in Figur 4 dargestellten ersten Eingabedaten 12, 14 später als die in Figur 3 dargestellten ersten Eingabedaten erstellt, so dass die erste Ausrüstung in der Zwischenzeit einer Alterung und Abnutzung unterworfen wurde.

Durch das Vorsehen einer vorgebbaren Dynamik kann der zulässige Bereich 13 im Lauf der Zeit derart angepasst werden, dass die Alterung und Abnutzung beim Auswerten der ersten Eingabedaten 12, 14 berücksichtigt werden. Im Vergleich zu Figur 3 hat sich dadurch der zulässige Bereich 13 der Figur 4 verschoben, wie insbesondere durch die gestrichpunkteten Linien deutlich wird. Durch die Dynamik ist daher ein unzulässiger Datenpunkt 14, welcher bei Aufnahme der in Figur 3 dargestellten Situation noch zulässig gewesen wäre, nun außerhalb des zulässigen Bereichs 13 angeordnet.

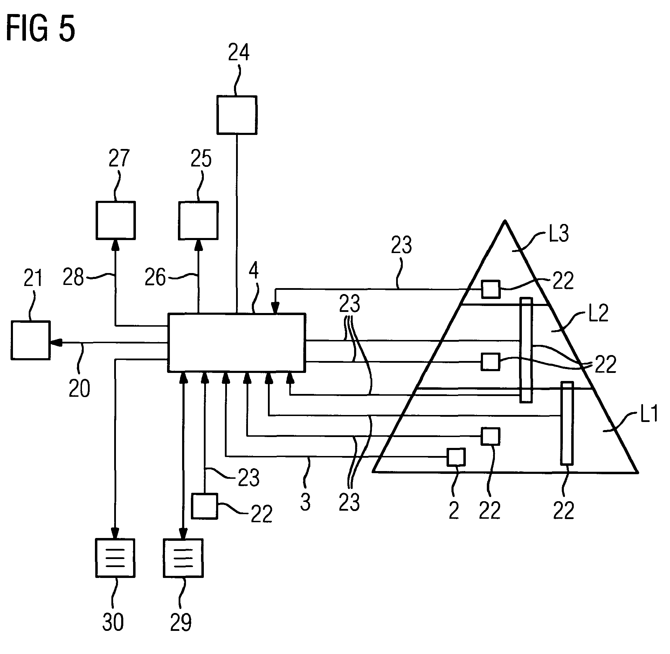

Figur 5 zeigt eine Schemadarstellung einer überwachten ersten Ausrüstung und mehrerer überwachten weiteren Ausrüstungen. Im Rahmen des Ausführungsbeispiels ist das dargestellte Dreieck der überwachten ersten Ausrüstung und der mehreren überwachten weiteren Ausrüstungen wie ein erstes Automatisierungssystem ausgeführt, welches in verschiedene Ebenen untergliederbar ist. Dabei umfasst eine erste Ebene L1 (Level 1), eine Basisautomatisierung, beispielsweise mit Sensorik, Elektromotoren und/oder Steuerungen. Eine zweite Ebene L2 kann beispielsweise die Prozessoptimierung mit einem Prozessmodell und eine dritte Ebene L3 ein "Manufacturing Execution System" (MES) oder dergleichen umfassen. Weitere Ebenen können außerdem noch vorgesehen sein. Unabhängig vom ersten Automatisierungssystem kann zusätzlich ein System für die Unternehmensressourcenplanung, im Englischen als "Enterprise-Resource-Planning" (ERP) 24 bekannt, vorgesehen sein.

Bezüglich der überwachten ersten Ausrüstung ist eine erste Logik 2 vorgesehen. Alternativ kann die erste Ausrüstung auch außerhalb des als Dreieck dargestellten ersten Automatisierungssystems ausgeführt sein, insbesondere als ein bestimmtes IT-System der Anlage, so dass die erste Logik 2 die erste Ausrüstung in Form des bestimmten IT-Systems überwacht. Die erste Ausrüstung in Form des bestimmten IT-Systems würde auch dann der ersten Logik 2 die ersten Eingabedaten zur Verfügung stellen, so dass das bestimmte IT-System der Anlage überwacht werden kann.

Weiterhin sind mehrere weitere Logiken 22 vorgesehen, welche innerhalb oder außerhalb des dargestellten Dreiecks angeordnet sein können. Jene weiteren Logiken 22, die innerhalb des Dreiecks angeordnet sind, können dabei auf einer der zuvor genannten Ebenen angeordnet sein, so dass deren jeweilige weiteren Eingabedaten von der zugehörigen Ebene stammen. Einige der weiteren Logiken 22 sind in Figur 5 derart dargestellt, dass sie sich über zwei oder mehr Ebenen erstrecken, was so zu verstehen ist, dass deren jeweilige weitere Eingabedaten von den entsprechenden zwei oder mehr Ebenen stammen.

Die erste Logik 2 sowie die weiteren Logiken 22 können jeweils eine Auswertung von ihnen jeweils zugeführten ersten Eingabedaten bzw. weiteren Eingabedaten durchführen und jeweils erste Ausgabedaten 3 bzw. weitere Ausgabedaten 23 ausgeben. Die verschiedenen Ausgabedaten 3 bzw. 23 werden der Überwachungsverwaltung 4 zugeführt, falls ein zweiter Zahlenwert einer Skala der jeweiligen Ausgabedaten 3 bzw. 23 jeweils einen gegebenen Wert erreicht oder überschreitet.

Die Überwachungsverwaltung 4 kann beispielsweise die Auswertung von weiteren Eingabedaten und die Ausgabe von weiteren Ausgabedaten 23 durch eine bestimmte der mehreren weiteren Logiken 22 veranlassen, falls die ersten Ausgabedaten 3 der ersten Logik 2 einen bestimmten Wert erreicht oder überschreitet. Durch das Ermitteln von gewünschten weiteren Ausgabedaten 23 kann bei vorher festgelegten Situationen ein besonders genaues Bild der zu überwachenden Ausrüstung gewonnen und für eine weitere Analyse gespeichert werden.

Im Rahmen des Ausführungsbeispiels ist weiterhin vorgesehen, dass die Überwachungsverwaltung 4 eine Zusatzinformation 20, welche den ersten Ausgabedaten 3 durch die erste Logik 2 zugeordnet werden kann, an ein erstes IT-System 21 weiterleitet. Weiterhin ist vorgesehen, dass die Überwachungsverwaltung 4 einen Bericht 26 an ein zweites IT-System 25 übermittelt. Ferner ist ein drittes IT-System 27 vorgesehen, beispielsweise in Form eines Instandhaltungs-Management-Systems (englisch: "Computerized Maintanance Management System", CMMS), an welches die Überwachungsverwaltung 4 einen Instandhaltungsauftrag 28 schicken kann. Schließlich kann die Überwachungsverwaltung 4 noch mit dem ERP 24 verbunden sein. Die Überwachungsverwaltung kann ferner mit einem mobilen Gerät 29 verbunden sein, wobei die Verbindung beispielsweise drahtlos ausgeführt ist und einen bidirektionalen Datenaustausch ermöglicht. Anhand des mobilen Geräts 29 können beispielsweise Abfragen durch "queries" vorgenommen werden, wobei die Überwachungsverwaltung 4 Daten des mobilen Geräts 29 einliest und Daten an das mobile Gerät ausgibt. Zur direkten Anzeige gewünschter Daten der Überwachungsverwaltung 4 ist außerdem ein mit der Überwachungsverwaltung 4 verbundener Bildschirm 30 vorgesehen.

Zusammenfassend betrifft die Erfindung eine Vorrichtung und ein Verfahren zum Überwachen einer ersten Ausrüstung einer technischen Anlage zur Herstellung eines Produkts mit folgenden Verfahrensschritten:
- Zuführen von ersten Eingabedaten an eine erste Logik,
- Durchführen einer Auswertung der ersten Eingabedaten durch die erste Logik,
- Ausgeben von ersten Ausgabedaten, welche einen ersten Zustand der überwachten ersten Ausrüstung charakterisieren, durch die erste Logik. Um bekannte Konzepte zur Zustandsüberwachung zu verbessern, wird vorgeschlagen, dass die ersten Eingabedaten
- erste Sensordaten, welche von in der Anlage befindlichen ersten Sensoren bereitgestellt werden,
mittels eines ersten Prozessmodells berechnete erste Daten, wobei das erste Prozessmodell einen ersten Prozess der Anlage abbildet, oder
erste Automatisierungsdaten einer ersten Funktion eines ersten Automatisierungssystems der Anlage,
- erste Auslegungsdaten, welche physikalische Größen der ersten Ausrüstung und/oder der Anlage charakterisieren,
- erste Parametrisierungsdaten, welche veränderliche und vorgebbare Daten bezüglich der ersten Ausrüstung und/oder der Anlage sind, und
- Betriebsdaten, welche die Herstellung des Produkts charakterisieren,
umfassen.

## Patentansprüche

1. Verfahren zum Überwachen einer ersten Ausrüstung einer technischen Anlage zur Herstellung eines Produkts mit folgenden Verfahrensschritten:
- Zuführen von ersten Eingabedaten (1) an eine erste Logik (2),
- Durchführen einer Auswertung der ersten Eingabedaten (1) durch die erste Logik (2),
- Ausgeben von ersten Ausgabedaten (3), welche einen ersten Zustand der überwachten ersten Ausrüstung charakterisieren, durch die erste Logik (2),
wobei die ersten Eingabedaten (1)
- erste Sensordaten, welche von in der Anlage befindlichen ersten Sensoren bereitgestellt werden,
mittels eines ersten Prozessmodells berechnete erste Daten, wobei das erste Prozessmodell einen ersten Prozess der Anlage abbildet, oder
erste Automatisierungsdaten einer ersten Funktion eines ersten Automatisierungssystems der Anlage,
- erste Auslegungsdaten, welche physikalische Größen der ersten Ausrüstung und/oder der Anlage charakterisieren,
- erste Parametrisierungsdaten, welche veränderliche und vorgebbare Daten bezüglich der ersten Ausrüstung und/oder der Anlage sind, und
- Betriebsdaten, welche die Herstellung des Produkts charakterisieren,
umfassen.

2. Verfahren nach Anspruch 1,
wobei die ersten Ausgabedaten (3) einen Zähler oder eine Abschätzung der verbleibenden Lebensdauer der ersten Ausrüstung bzw. der Anlage umfassen.

3. Verfahren nach einem der vorhergehenden Ansprüche,
wobei die ersten Ausgabedaten (3) einen ersten Zahlenwert einer Skala umfassen, und
wobei die erste Logik (2) die ersten Ausgabedaten (3) bei Erreichen oder Überschreiten eines gegebenen ersten Wertes durch Hinzufügen einer Zusatzinformation, welche nach steigender Relevanz geordnet als "Info", "Warnung" oder "Alarm" ausgeführt werden kann, zu erweiterten ersten Ausgabedaten erweitert.

4. Verfahren nach Anspruch 3,
wobei erste Gültigkeitskriterien zur Reduktion der Anzahl bzw. zum Ausschluss fehlerhafter erster Ausgabedaten (3) vorgesehen sind, und
wobei die ersten Gültigkeitskriterien von den ersten Eingabedaten (1) umfasst sind.

5. Verfahren nach einem der vorhergehenden Ansprüche,
wobei eine weitere Ausrüstung der technischen Anlage mittels der folgenden Verfahrensschritte überwacht wird:
- Zuführen von weiteren Eingabedaten an eine weitere Logik (22),
- Durchführen einer Auswertung der weiteren Eingabedaten durch die weitere Logik (22),
- Ausgeben von weiteren Ausgabedaten (23), welche einen weiteren Zustand der überwachten weiteren Ausrüstung charakterisieren, durch die weitere Logik (22),
wobei die weiteren Eingabedaten
- weitere Sensordaten, welche von in der Anlage befindlichen weiteren Sensoren bereitgestellt werden,
mittels eines weiteren Prozessmodells berechnete weitere Daten, wobei das weitere Prozessmodell einen weiteren Prozess der Anlage abbildet, oder
weitere Automatisierungsdaten einer weiteren Funktion eines weiteren Automatisierungssystems der Anlage,
- weitere Auslegungsdaten, welche physikalische Größen der weiteren Ausrüstung und/oder der Anlage charakterisieren,
- weitere Parametrisierungsdaten, welche veränderliche und vorgebbare Daten bezüglich der weitere Ausrüstung und/oder der Anlage sind, und
- die Betriebsdaten
umfassen.

6. Verfahren nach einem der vorhergehenden Ansprüche,
wobei die ersten Ausgabedaten (3) an eine Überwachungsverwaltung (4) ausgegeben werden, falls ein zweiter Zahlenwert einer Skala der ersten Ausgabedaten (3) einen gegebenen zweiten Wert erreicht oder überschreitet.

7. Verfahren nach Anspruch 6,
wobei die Überwachungsverwaltung (4) eine semantische Darstellung zumindest der ersten Eingabedaten (1) ausgibt.

8. Verfahren nach den Ansprüchen 3, 5 und 6,
wobei die Überwachungsverwaltung (4) zumindest eine der folgenden Aktionen auslöst:
- Durchführen einer Auswertung der ersten Eingabedaten (1) mittels der weiteren Logik (22),
- Durchführen einer Auswertung der weiteren Eingabedaten mittels der ersten Logik (2),
- Verändern eines oder mehrerer Datenerfassungsparameter, welche die Bereitstellung der ersten Sensordaten durch die ersten Sensoren bzw. die Bereitstellung der weiteren Sensordaten durch die weiteren Sensoren charakterisieren,
- Weiterleiten der Zusatzinformation an ein erstes IT-System bzw. an ein zweites Automatisierungssystem der Anlage, falls die erweiterten ersten Ausgabedaten eine Zusatzinformation (20) umfassen,
- Benachrichtigen von Personen oder Personengruppen bei einem Betreiber der Anlage und/oder einem Dienstleister.

9. Verfahren nach einem der vorhergehenden Ansprüche,
wobei die Bereitstellung der ersten Sensordaten durch die ersten Sensoren und/oder die Auswertung der ersten Eingabedaten (1) durch die erste Logik (2) abhängig vom Zustand der ersten Ausrüstung oder abhängig von der ersten Funktion des ersten Automatisierungssystems erfolgt.

10. Verfahren nach den Ansprüchen 6 und 9,
wird das Verfahren periodisch durchgeführt, wobei die die Periode durch die Überwachungsverwaltung (4) änderbar ist.

11. Verfahren nach einem der vorhergehenden Ansprüche,
wobei die ersten Ausgabedaten (3) an eine Überwachungsverwaltung (4) ausgegeben werden, falls ein zweiter Zahlenwert einer Skala der ersten Ausgabedaten (3) einen gegebenen zweiten Wert erreicht oder überschreitet,
wobei die Überwachungsverwaltung (4) zumindest die ersten Eingabedaten (1) und die ersten Ausgabedaten (3) als einen ersten Schnappschuss (9) in einem ersten Langzeitarchiv (10) ablegt,
falls ein dritter Zahlenwert einer Skala der ersten Ausgabedaten (3) einen gegebenen dritten Wert erreicht oder überschreitet und/oder falls die Langzeitarchivierung manuell ausgelöst wird.

12. Verfahren nach einem der vorhergehenden Ansprüche,
wobei die erste Logik (2) zumindest die ersten Eingabedaten (1) und die ersten Ausgabedaten (3) als einen zweiten Schnappschuss (9) in einem zweiten Langzeitarchiv ablegt, falls ein vierter Zahlenwert einer Skala der ersten Ausgabedaten (3) einen gegebenen vierten Wert erreicht oder überschreitet und/oder falls die Langzeitarchivierung manuell ausgelöst wird.

13. Verfahren nach Anspruch 11 oder 12,
wobei vorgebbare, im ersten Langzeitarchiv (10) oder dem zweiten Langzeitarchiv abgelegte Schnappschüsse bei einer Datenverdichtung oder Datenlöschung unberücksichtigt bleiben.

14. Verfahren nach Anspruch 5 und Anspruch 11, 12 oder 13, wobei der erste Schnappschuss (9) und ein gleichzeitig erfasster weiterer Schnappschuss, der zumindest die weiteren Eingabedaten und die weiteren Ausgabedaten (23) umfasst, mit einer gemeinsamen Referenz im ersten Langzeitarchiv (10) und/oder zweiten Langzeitarchiv abgelegt werden.

15. Verfahren nach Anspruch 4 und Anspruch 14,
wobei, falls zu einem gegebenen Zeitpunkt die ersten Gültigkeitskriterien nicht erfüllt sind, der letztgültige oder der nächstgültige erste Schnappschuss (9) mit derselben Referenz im ersten Langzeitarchiv (10) und/oder im zweiten Langzeitarchiv abgelegt wird, wie jener weitere Schnappschuss des gegebenen Zeitpunkts.

16. Verfahren nach einem der vorhergehenden Ansprüche,
wobei zumindest die ersten Eingabedaten (1) und die ersten Ausgabedaten (3) in einem Zwischenspeicher (11) abgelegt werden,
falls ein fünfter Zahlenwert einer Skala der ersten Ausgabedaten (3) einen gegebenen fünften Wert erreicht oder überschreitet.

17. Verfahren nach einem der vorhergehenden Ansprüche,
wobei ein Bericht erstellt wird und das Format des Berichts an ein spezifisches Ausgabemedium angepasst ist,
falls ein sechster Zahlenwert einer Skala der ersten Ausgabedaten (3) einen gegebenen sechsten Wert erreicht oder überschreitet.

18. Verfahren nach einem der vorhergehenden Ansprüche,
wobei zumindest die ersten Sensoren auch für ein drittes Automatisierungssystem der Anlage verwendet werden.

19. Verfahren nach einem der vorhergehenden Ansprüche,
wobei die ersten Sensoren als virtuelle Sensoren ausgeführt sind.

20. Verfahren nach einem der vorhergehenden Ansprüche,
wobei die Parametrierungsdaten mit einer vorgebbaren Dynamik verändert werden.

21. Verfahren nach den Ansprüchen 19 und 20,
wobei die vorgebbare Dynamik in Abhängigkeit von den ersten Eingabedaten (1) änderbar ist.

## Claims

1. Method for monitoring a first piece of equipment of a technical facility for manufacturing a product, including the following method steps:
- routing first input data (1) to a first logic (2),
- carrying out an evaluation of the first input data (1) via the first logic (2),
- outputting first output data (3), which characterize a first condition of the monitored first piece of equipment, via the first logic (2),
wherein the first input data (1) comprise
- first sensor data which are provided by first sensors situated in the facility,
first data calculated by means of a first process model, wherein the first process model maps a first process of the facility, or
first automation data of a first function of a first automation system of the facility,
- first design data which characterize physical variables of the first piece of equipment and/or the facility,
- first parameterization data which are variable and predefinable data with respect to the first piece of equipment and/or the facility, and
- operating data which characterize the manufacture of the product.

2. Method according to Claim 1,
wherein the first output data (3) comprise a counter or an estimation of the remaining lifetime of the first piece of equipment or the facility.

3. Method according to one of the preceding claims,
wherein the first output data (3) comprise a first numerical value of a range, and
wherein the first logic (2) expands the first output data (3) into expanded first output data if a given first value is reached or exceeded, by adding an additional piece of information which may be implemented according to increasing relevance, classified as "information," "warning," or "alarm."

4. Method according to Claim 3,
wherein first validity criteria are provided for reducing the quantity of, or excluding, erroneous first output data (3), and wherein the first validity criteria are comprised by the first input data (1).

5. Method according to one of the preceding claims,
wherein an additional piece of equipment of the technical facility is monitored by means of the following method steps:
- supplying additional input data to an additional logic (22),
- carrying out an evaluation of the additional input data via the additional logic (22),
- outputting additional output data (23), which characterize an additional condition of the monitored additional piece of equipment, via the additional logic (22),
wherein the additional input data comprise
- additional sensor data which are provided by additional sensors situated in the facility,
additional data calculated by means of an additional process model, wherein the additional process model maps an additional process of the facility, or
additional automation data of an additional function of an additional automation system of the facility,
- additional design data which characterize physical variables of the additional piece of equipment and/or the facility,
- additional parameterization data which are variable and predefinable data with respect to the additional piece of equipment and/or the facility, and
- the operating data.

6. Method according to one of the preceding claims,
wherein the first output data (3) are output to a monitoring management (4) if a second numerical value of a range of the first output data (3) reaches or exceeds a given second value.

7. Method according to Claim 6,
wherein the monitoring management (4) outputs a semantic representation at least of the first input data (1).

8. Method according to Claims 3, 5, and 6,
wherein the monitoring management (4) triggers at least one of the following actions:
- carrying out an evaluation of the first input data (1) by means of the additional logic (22),
- carrying out an evaluation of the additional input data by means of the first logic (2),
- changing one or multiple data collection parameters which characterize the provision of the first sensor data via the first sensors or the provision of the additional sensor data via the additional sensors,
- routing the additional piece of information to a first IT system or to a second automation system of the facility if the expanded first output data comprise an additional piece of information (20),
- notifying persons or groups of persons at an operating company of the facility and/or a services provider.

9. Method according to one of the preceding claims, wherein the provision of the first sensor data is carried out via the first sensors and/or the evaluation of the first input data (1) is carried out via the first logic (2), as a function of the condition of the first piece of equipment or as a function of the first function of the first automation system.

10. Method according to Claims 6 and 9,
wherein the method is carried out periodically, and wherein the period is changeable via the monitoring management (4).

11. Method according to one of the preceding claims,
wherein the first output data (3) are output to a monitoring management (4) if a second numerical value of a range of the first output data (3) reaches or exceeds a given second value, wherein the monitoring management (4) stores at least the first input data (1) and the first output data (3) as a first snapshot(9) in a first long-term archive (10),
if a third numerical value of a range of the first output data (3) reaches or exceeds a given third value and/or if the long-term archiving is triggered manually.

12. Method according to one of the preceding claims, wherein the first logic (2) stores at least the first input data (1) and the first output data (3) as a second snapshot (9) in a second long-term archive if a fourth numerical value of a range of the first output data (3) reaches or exceeds a given fourth value and/or if the long-term archiving is manually triggered.

13. Method according to Claim 11 or 12,
wherein predefinable snapshots stored in the first long-term archive (10) or the second long-term archive remain disregarded in the event of a data compression or data deletion.

14. Method according to Claim 5 and Claim 11, 12, or 13, wherein the first snapshot (9) and a simultaneously recorded additional snapshot, which comprises at least the additional input data and the additional output data (23), are stored in the first long-term archive (10) and/or second long-term archive, having a shared reference.

15. Method according to Claim 4 and Claim 14,
wherein, if the first validity criteria are not met at a given point in time, the latest or next valid first snapshot (9) having the same reference is stored in the first long-term archive (10) and/or in the second long-term archive, like each additional snapshot of the given point in time.

16. Method according to one of the preceding claims, wherein at least the first input data (1) and the first output data (3) are stored in a buffer (11),
if a fifth numerical value of a range of the first output data (3) reaches or exceeds a given fifth value.

17. Method according to one of the preceding claims, wherein a report is created and the format of the report is adapted to a specific output medium,
if a sixth numerical value of a range of the first output data (3) reaches or exceeds a given sixth value.

18. Method according to one of the preceding claims, wherein at least the first sensors are also used for a third automation system of the facility.

19. Method according to one of the preceding claims, wherein the first sensors are designed as virtual sensors.

20. Method according to one of the preceding claims, wherein the parameterization data are changed using predefinable dynamics.

21. Method according to Claims 19 and 20,
wherein the predefinable dynamics are changeable as a function of the first input data (1).

## Revendications

1. Procédé de surveillance d'un premier équipement d'une installation technique de fabrication d'un produit, ayant les stades de procédé suivantes :
- envoi de premières données ( 1 ) d'entrée à une première logique ( 2 ),
- exploitation des premières données ( 1 ) d'entrée par la première logique ( 2 ),
- sortie par la première logique ( 2 ) de premières données ( 3 ) de sortie, qui caractérisent un premier état du premier équipement surveillé,
dans lequel les premières données ( 1 ) d'entrée comprennent
- des premières données de capteurs, qui sont mises à disposition par des premiers capteurs se trouvant dans l'installation,
- des premières données calculées au moyen d'un premier modèle de processus, le premier modèle de processus reproduisant un premier processus de l'installation ou
des premières données d'automatisation d'une première fonction d'un premier système d'automatisation de l'installation,
- des premières données de conception, qui caractérisent des grandeurs physiques du premier équipement et/ou de l'installation,
- des premières données de paramétrisation, qui sont des données variables ou pouvant être prescrites se rapportant au premier équipement et/ou à l'installation et
- des données de fonctionnement, qui caractérisent la fabrication du produit.

2. Procédé suivant la revendication 1,
dans lequel les premières données ( 3 ) de sortie comprennent un décompte ou une estimation de la durée de vie restante du premier équipement ou de l'installation.

3. Procédé suivant l'une des revendications précédentes,
dans lequel les premières données ( 3 ) de sortie comprennent une première valeur numérique d'une échelle et
dans lequel la première logique ( 2 ) étend les premières données ( 3 ) de sortie en des premières données de sortie étendues, lorsqu'une première valeur donnée est atteinte ou dépassée par addition d'une information supplémentaire, qui peut, ordonnée suivant la pertinence croissante, être réalisée sous la forme de "info", "avertissement" ou "alerte".

4. Procédé suivant la revendication 3,
dans lequel il est prévu des premiers critères de validité pour réduire le nombre ou pour exclure des premières données ( 3 ) de sortie défectueuses et
dans lequel les premiers critères de validité sont compris par les premières données ( 1 ) d'entrée.

5. Procédé suivant l'une des revendications précédentes,
dans lequel on surveille un autre équipement de l'installation technique au moyen des stades de procédé suivantes :
- envoi d'autres données d'entrée à une autre logique ( 22 ),
- exploitation des autres données d'entrée par l'autre logique ( 22 ),
- sortie par l'autre logique ( 22 ) d'autres données ( 23 ) de sortie, qui caractérisent un autre état de l'autre équipement surveillé,
dans lequel les autres données d'entrée comprennent
- d'autres données de capteurs, qui sont mises à disposition par d'autres capteurs se trouvant dans l'installation, d'autres données calculées à l'aide d'un autre modèle de processus, l'autre modèle de processus reproduisant un autre processus de l'installation ou
d'autres données d'automatisation d'une autre fonction d'un autre système d'automatisation de l'installation,
- d'autres données de conception, qui caractérisent des grandeurs physiques de l'autre équipement et/ou de l'installation,
- d'autres données de paramétrisation, qui sont des données variables et pouvant être prescrites se rapportant à l'autre équipement et/ou à l'installation et
- des données de fonctionnement.

6. Procédé suivant l'une des revendications précédentes,
dans lequel les premières données ( 3 ) de sortie sont envoyées à une gestion ( 4 ) de surveillance, si une deuxième valeur numérique d'une échelle des premières données ( 3 ) de sortie atteint ou dépasse une deuxième valeur donnée.

7. Procédé suivant la revendication 6,
dans lequel la gestion ( 4 ) de surveillance envoie une représentation sémantique au moins des premières données ( 1 ) d'entrée.

8. Procédé suivant les revendications 3, 5 et 6,
dans lequel la gestion ( 4 ) de surveillance déclenche au moins l'une des actions suivantes :
- exploitation des premières données ( 1 ) d'entrée à l'aide de l'autre logique ( 22 ),
- exploitation des autres données d'entrée à l'aide de la première logique ( 2 ),
- modification d'un paramètre ou de plusieurs paramètres de saisie de données, qui caractérise la mise à disposition des premières données de capteurs par les premiers capteurs ou la mise à disposition des autres données de capteurs par les autres capteurs,
- acheminement de l'information supplémentaire à un premier système IT ou à un deuxième système d'automatisation de l'installation, si les premières données de sortie étendues comprennent une information ( 20 ) supplémentaire,
- information de personnes ou de groupes de personnes chez un opérateur de l'installation et/ou un prestataire de service.

9. Procédé suivant l'une des revendications précédentes,
dans lequel la mise à disposition des premières données de capteurs par les premiers capteurs et/ou l'exploitation des premières données ( 1 ) d'entrée par la première logique ( 2 ) s'effectue en fonction de l'état du premier équipement ou en fonction du premier fonctionnement du premier système d'automatisation.

10. Procédé suivant les revendications 6 et 9,
le procédé étant effectué périodiquement, la période pouvant être modifiée par la gestion ( 4 ) de surveillance.

11. Procédé suivant l'une des revendications précédentes,
dans lequel les premières données ( 3 ) de sortie sont envoyées à une gestion ( 4 ) de surveillance, si une deuxième valeur numérique d'une échelle des premières données ( 3 ) de sortie atteint ou dépasse une deuxième valeur donnée,
dans lequel la gestion ( 4 ) de surveillance mémorise au moins les premières données ( 1 ) d'entrée et les premières données ( 3 ) de sortie sous la forme d'une première photographie ( 9 ) instantanée dans une première archive ( 10 ) de longue durée,
si une troisième valeur numérique d'une échelle des premières données ( 3 ) de sortie atteint ou dépasse une troisième valeur donnée et/ou si l'archivage de longue durée est déclenché manuellement.

12. Procédé suivant l'une des revendications précédentes,
dans lequel la première logique ( 2 ) mémorise, dans une deuxième archive de longue durée, au moins les premières données ( 1 ) d'entrée et les premières données ( 3 ) de sortie sous la forme d'une deuxième photographie ( 9 ) instantanée, si une quatrième valeur numérique d'une échelle des premières données ( 3 ) de sortie atteint ou dépasse une quatrième valeur donnée et/ou si l'archivage de longue durée est déclenché manuellement.

13. Procédé suivant la revendication 11 ou 12,
dans lequel des photographies instantanées pouvant être données à l'avance et déposées dans la première archive ( 10 ) de longue durée ou dans la deuxième archive de longue durée restent non prises en compte lors d'une compression de données ou d'un effacement de données.

14. Procédé suivant la revendication 5 et la revendication 11, 12 ou 13,
dans lequel la première photographie ( 9 ) instantanée et une autre photographie instantanée prise en même temps, qui comprend au moins les autres données d'entrée et les autres données ( 23 ) de sortie, sont mémorisées avec une référence commune dans la première archive ( 10 ) de longue durée et/ou dans la deuxième archive de longue durée.

15. Procédé suivant la revendication 4 et la revendication 14, dans lequel, si à un instant donné, les critères de validité ne sont pas satisfaits, on mémorise la première photographie
( 9 ) instantanée valable en dernier ou valable en avant-dernier par la même référence dans la première archive ( 10 ) de longue durée et/ou dans la deuxième archive de longue durée, comme toute autre photographie instantanée de l'instant donné.

16. Procédé suivant l'une des revendications précédentes,
dans lequel on mémorise au moins les premières données ( 1 ) d'entrée et les premières données ( 3 ) de sortie dans une mémoire ( 11 ) tampon,
si une cinquième valeur numérique d'une échelle des premières données ( 3 ) de sortie atteint ou dépasse une cinquième valeur donnée.

17. Procédé suivant l'une des revendications précédentes,
dans lequel on établit un compte rendu et on adapte le format du compte rendu à un support de sortie spécifique,
si une sixième valeur numérique d'une échelle des premières données ( 3 ) de sortie atteint ou dépasse une sixième valeur donnée.

18. Procédé suivant l'une des revendications précédentes,
dans lequel on utilise au moins les premiers capteurs également pour un troisième système d'automatisation de l'installation.

19. Procédé suivant l'une des revendications précédentes,
dans lequel les premiers capteurs sont réalisés sous la forme de capteurs virtuels.

20. Procédé suivant l'une des revendications précédentes,
dans lequel on modifie les données de paramétrisation par une dynamique pouvant être donnée à l'avance.

21. Procédé suivant les revendications 19 et 20,
dans lequel la dynamique pouvant être donnée à l'avance peut être modifiée en fonction des premières données ( 1 ) d'entrée.
